# EUROPEAN PATENT SPECIFICATION

(11) **EP 3 350 140 B1**
(45) Date of publication and mention of the grant of the patent: **03.08.2022**
(21) Application number: 16782306.1
(22) Date of filing: 16.09.2016
(51) Int. Cl.: F26B 3/04, F26B 11/04, F26B 21/10, F26B 21/12, C05F 3/00

(54) **SYSTEM FOR PROCESSING, PARTICULARLY SANITIZING AND DRYING, ANIMAL MANURE**
SYSTEM ZUR VERARBEITUNG, INSBESONDERE ZUR HYGIENISIERUNG UND TROCKNUNG, VON TIERDUNG
SYSTÈME DE TRAITEMENT, EN PARTICULIER D'ASEPTISATION ET DE SÉCHAGE, DE FUMIER ANIMAL

(30) Priority: 18.09.2015 NL 2015464
(43) Date of publication of application: 25.07.2018
(73) Proprietor: Golstein Mestsystemen B.V., 4043 LE Opheusden (NL)
(72) Inventor: GOLSTEIN, Gerhard, 4043 LW Opheusden (NL)
(74) Representative: Patentwerk B.V.
(86) International application number: PCT/NL2016/050638
(87) International publication number: WO 2017/048124

(56) References cited:
- EP-A1- 0 445 102
- CA-A1- 2 798 880
- GB-A- 489 710
- GB-A- 1 163 579

## Description

The present invention relates to a method and a system for processing, particularly sanitizing and drying, organic material such as animal manure.

Animal manure is a byproduct of animal farming. With industrialization and animals being kept on an increasingly large scale, many animal farms create a manure surplus because they produce more manure than they can process.

Animal manure as waste product can however also be effectively used as nutrient for for instance nutrient-poor soils. It must be possible for this purpose to process and transport this manure. Animal manure however generally has a high liquid content and is unhygienic, which makes is difficult to transport and process.

GB 489 710 describes the treatment of chicken manure in order to make a lightweight fertilizer, wherein the chicken manure passes through a rotating drying drum which is heated to temperatures of up to 300°C. This takes a lot of energy. GB1163579 describes improvements in or relating to drying machines and relates to a machine for drying and milling wet manure into a fine aggregate suitable for disposal as a fertilizer. The machine is envisaged as being particularly beneficial to poultry farmers who are faced with the 15 problem of disposing of the manure from battery birds. This is considerable when, in many cases, the number of birds runs into thousands.

The present invention therefore has for its object to alleviate the above stated problems and drawbacks and to provide an improved system for processing organic material, such as animal manure, so that the processed material can be used more effectively.

The invention comprises for this purpose a system for processing, particularly sanitizing and drying, organic material such as animal manure, comprising: a stationary frame; an elongate drying drum which is held by the frame and extends in substantially horizontal direction, and is divided in longitudinal direction into an infeed part on a first end surface of the drum, provided with an infeed opening for infeed of material into the drum; an outfeed part on a second, opposite end surface of the drum, provided with an outfeed opening for discharge of material from the drum; and a processing part situated between the infeed and outfeed part for processing supplied material; a drive connectable to the frame for rotating the drying drum around the longitudinal axis of the drying drum; wherein the infeed part, the outfeed part and the processing part are each provided with displacers for displacing material at least in the rotation direction of the drying drum; and a stationary aerator, extending from the outer side of the drum to at least a position in the processing part of the drying drum, for aerating the material in the drying drum.

The material to be processed is for instance animal manure, such as chicken or pig manure. It is however also possible to employ the system for other organic material. The material is preferably a compostable material.

The system is preferably configured to allow animal manure to compost naturally in the drying drum. During this natural degradation process the manure dries partially, and the manure can reach temperatures of more than 60 degrees Celsius. The manure is hereby also sanitized, since pathogens will not survive this temperature. Bacteria have to be provided with sufficient oxygen for this natural process. The manure transported through the drum comes into contact at least in the processing part of the drum with air provided with oxygen and supplied by the aerator in order to thus be able to meet the oxygen demand of the bacteria. An additional advantage is that the supplied air is heated due to the increased temperature and can thus absorb moisture, such as water, from the manure, which dries the manure further. The drying drum is for instance mounted in the frame by means of bearings. Manure to be processed is supplied via the infeed opening to the drying drum, processed in the drying drum, and removed from the drying drum via the outfeed opening, for instance by means of an adjustable overflow.

The displacers ensure that the introduced material does not stick to the walls of the drum but that the material is turned over itself during rotation of the drum so as to keep turning over the material. During rotation of the drum, the introduced material can distribute itself over the length of the drum. When the material in the drum reaches a determined level and additional material is supplied, the new material gradually pushes the material already present in the drum to the rear, where the dried material can be taken out of the drum via the outfeed opening.

The advantage of such a system is that it can for instance be installed directly in an animal accommodation to enable direct processing of fresh manure from the accommodation. This improves the climate in the animal accommodation and drastically decreases ammonia emission from the accommodation.

The drive of the drying drum ensures that the drum can be rotated frequently so that the material inside the drum can be turned over. The material is hereby distributed and mixed in the drum, and air with absorbed water vapour can be released from the material. This has the result that the material, such as animal manure, can come into contact with new air and new oxygen, which enhances the natural degradation process.

The system is preferably configured to process manure with a dry matter content from 30%, for instance chicken manure, and to preferably convert this manure into manure with a dry matter content from 70, particularly from 80%.

The displacers in the infeed part are for instance configured to displace material from the infeed opening to the processing part, wherein the displacers in the processing part are for instance configured to displace material from the processing part to the outfeed part and to mix material in the processing part, and wherein the displacers in the outfeed part are for instance configured to displace the processed material to the outfeed opening. The greater part of the processing hereby takes place in the processing part. By mixing the material in this part the residence time in this part can be extended in order to thus enable sufficient oxygen to be supplied to the material.

The displacers are for instance situated on the inner wall of the drying drum and are for instance rigidly connected to the inner side of the drying drum. During rotation of the drum the displacers co-rotate and thus displace the material. The mixing of material in the drum can in this way be controlled by means of the rotation speed and rotation time of the drum.

The displacers are for instance configured to entrain material along the wall of the drying drum during a turning movement of the drum and to drop this material again at a higher point.

The processing part and the outfeed part are for instance separated from each other by means of a division, such as a partition, wherein the division is provided with a passage opening for passage of material. It is however possible that a plurality of passage openings is provided. Separating the two parts of the drying drum has the advantage that the two functionalities, i.e. the processing and the outfeed, are separated from each other. The desired ambient condition, such as for instance temperature, air humidity or air flow, can hereby be maintained in each of the parts. The passage opening is for instance a thin gap which allows limited passage of material. Air exchange between the divided parts is hereby allowed to limited extent.

The central axis of the drying drum for instance lies at an angle relative to the horizontal, particularly at an angle of between 0.5 and 5 degrees. This angle facilitates transport of material from the infeed to the outfeed because the force of gravity results in this arrangement in a force with a component in the transport direction, and thus aids the transport.

The system is possibly also provided with supply means for supplying material to the infeed opening, these supply means comprising for instance a conveyor belt and/or a hopper and/or a distributor. A distributor enables supplied manure to be supplied to the drying drum in a uniform and aerated manner, which enhances the processing. The conveyor belt for instance extends at least partially into the infeed part of the drying drum. It is advantageous to control the supply means such that manure is supplied to the drying drum in small quantities in order to keep the drying process and/or the temperature of the material in the drying drum constant. The supply means can also be used to supply additive material to the drum. This material is for instance organic matter such as straw or lime.

It is however possible to vary the extent to which supply means extend into the infeed part. Fresh manure can hereby be supplied to the drum at different positions in longitudinal direction. When relatively wet manure for instance has to be processed, this wet manure can be supplied relatively far into the drum. The manure already present in the drum has already been dried at this position in the drum. When this relatively dry manure is mixed with the new relatively wet manure, a manure is formed which is drier on average and which can be processed more effectively by the drum.

The system is possibly also provided with discharge means for discharging processed material from the outfeed part via the outfeed opening. The discharge means consist for instance of a discharge screw or a conveyor belt. The processed material flows for instance via the outfeed opening into a collecting receptacle. A discharge screw for displacing dried material from the receptacle is for instance located at the bottom of this collecting receptacle. It is also possible for a discharge screw to be located on the rear wall (end surface) of the drum on the outfeed side and for the discharge screw to be provided with a height sensor, wherein the discharge screw discharges material from the drum when the height sensor detects a predetermined height of material in the drum.

The system is possibly also provided with a temperature sensor for measuring the temperature in the drying drum. For good composting and sanitizing of for instance manure, the manure is preferably kept at a temperature of between 50 and 70 degrees. By providing the system with a temperature sensor it is for instance possible to adjust the air supply and rotation speed to maintain this temperature range. If the temperature is for instance too high, the rotation speed and/or the air supply can be increased, and vice versa. The system can also be provided with other sensors, such as gas detection and humidity sensors. The control unit can thus also be configured to control the drive speed of the drive and/or the supply speed of the supply means and/or the aerator on the basis of the temperature measured by the sensors.

The temperature sensor is for instance situated in a tube extending over the longitudinal direction of the drying drum. This tube is for instance of thermally conductive material such as metal. The temperature sensor is for instance located on the inner wall of the tube and determines the temperature of the material, such as the manure, via the tube. It is however possible for a plurality of sensors to be situated over the length of the tube. The sensor is pressed against the inner wall of the tube by means of for instance a magnet or a spring.

In some cases the system comprises a plurality of temperature sensors, for instance three sensors, for determining the temperature. The use of a plurality of sensors makes it possible to measure the temperature simultaneously at multiple locations, for instance the temperature in the infeed part, the processing part and the outfeed part, and to control the system on the basis of these data.

The system for instance also comprises a control unit configured to control the drive speed of the drive and/or the supply speed of the supply means. The drive for rotating the drying drum can be configured to control the drying of the manure, and the supply speed for the manure can for instance determine the speed at which the manure progresses through the drum. The control unit can for instance be configured to move a predetermined quantity of manure through the drum in a predetermined amount of time. The control unit preferably also comprises a memory for storing the measured temperatures.

The control unit can also be configured to track the quantity of material supplied by the supply means and/or material discharged by the discharge means. The number of rotations of the discharge screw is for instance tracked for this purpose. The discharge screw discharges the dried material, and a determined volume and/or weight of dried material is discharged with every rotation of the screw. The number of rotations multiplied by this volume and/or weight is a measure for the quantity of discharged material. It is however possible to weigh the quantity of discharged material by means of a weighing system.

The drying drum for instance periodically rotates for a number of minutes, depending on the supplied type of material or type of manure. In the case of relatively dry manure the drying drum for instance rotates continuously. In the case of relatively humid manure the drying drum rotates according to a pulsed programme because wet manure will otherwise clump and lose its aerated structure, which is detrimental to the processing and/or composting process of the manure. When the drum does not rotate, the aerator provides for oxygen supply and discharge of moisture.

For processing of the material, the material generally remains in the drying drum for several days, depending on the quantity of material and the dry matter content in the supplied material, wherein wet material requires a longer residence time than dry material. This time will generally vary between 3 and 10 days.

For displacing of the supplied material the displacers are for instance formed by vanes for displacing material in the drum in rotation direction during rotation of the drum. The vanes can also be configured to displace material in the direction of the outfeed opening. The vanes for instance lie at an angle relative to the longitudinal axis of the drying drum in longitudinal direction, preferably at an angle of between 5 and 60 degrees, particularly between 10 and 45 degrees. By placing at least some of the vanes at an angle to the longitudinal direction of the drum the vanes exert a force with a component in the longitudinal direction of the drum on the material to be processed during rotation of the drum.

The vanes in the processing part are for instance at least partially arcuate in longitudinal direction. An arcuate form provides for a uniform displacement of material in the drum. A bent form, wherein the arc is formed by a number of bends of the vane, is another preferred embodiment which is easier to produce compared to the arcuate form.

The vanes are preferably placed substantially evenly over the inner wall of the drying drum in peripheral direction so that a uniform displacement of material takes place during rotation of the drum. The uniform distribution also has the effect that forces which are exerted on the vanes by the material during rotation are uniformly distributed over the peripheral wall of the drum.

The vanes in the processing part for instance take a form curved to the left or to the right, these forms alternating in longitudinal direction. The vanes are thus preferably alternately directed toward the outfeed (return) and toward the infeed (outward). The result hereof is that the material is in longitudinal direction moved partly toward the outfeed opening by the one type of vane and moved partly back by the other type of vane. Curved alternately to the left and to the right is understood to mean that the successive vanes are bent in different directions along an imaginary line in the longitudinal direction of the drum, from the infeed to the outfeed.

The vanes in the infeed part for instance lie at least partially at an angle to the longitudinal axis of the drying drum, particularly at an angle of between 10 and 45 degrees. Positioning at least some of the vanes in the infeed part at an angle to the longitudinal direction of the drum enables the vanes to exert a force on the manure to be processed during rotation of the drum, this force having a component in the longitudinal direction of the drum, and the vanes move the material from the infeed to the processing part.

The vanes in the outfeed part for instance do not lie at an angle relative to the longitudinal direction of the drying drum, but extend in longitudinal direction. The vanes in the outfeed part hereby play no part in displacing of material in longitudinal direction.

The vanes in the processing part for instance lie in the rotation direction of the drying drum at an angle relative to the normal of the drying drum at the position of the vanes. The normal of the drying drum is for instance a line from a point on the drum to an opposite point of the drum, and in the case of a cylindrical drum is directed toward the central axis of the drum. The vanes for instance lie at an angle relative to such a normal or line, and thus do not lie at a right angle to the peripheral wall of the drying drum. Changing the angle of the vanes relative to the normal makes it possible to control the amount of manure that is entrained by the vanes and the length of time that the material can remain on the vanes. The vanes in the outfeed part can also lie in the rotation direction of the drying drum at an angle relative to the normal of the drying drum at the position of the vanes.

The vanes are thus positioned overhanging to the rear in the rotation direction of the drying drum. Material on the vanes hereby slides off the vanes at a relatively early point in time and by a relatively small angular displacement. This provides for a uniform small turning over or displacing of the material in the drum, and thus for a more uniform processing thereof.

The aerator of the system is for instance configured to discharge heat and moisture from the material in the processing part. During processing of for instance manure in the processing part, the temperature of the manure generally rises beyond optimal operating temperatures. If the temperature becomes too high, additional air from outside the drum, which can absorb the heat, can for instance be supplied to the manure. The operating temperature of the manure in the processing part can hereby be regulated by the air flow.

The aerator is for instance configured to supply air, and preferably animal accommodation air, to the material to be processed at a flow rate subject to the quantity of material in the drying drum. The aerator can thus be adjusted to the volume and/or density of the material in the drying drum. The aerator comprises for instance a perforated tube extending at least through the processing part of the drum. Air is supplied to the tube and can be delivered to the air in the drying drum by means of the perforations in the tube. The perforations of the tube are preferably situated at least in the processing part of the drum. The tube can have all manner of forms and cross-sections. The tube advantageously has a pointed form in rotation direction, so that material encounters little resistance from the aerator while rotating in the drum. The aerator can also consist of an assembly of tubes.

The aerator can also consist of one or more tubes with perforations, wherein air is supplied to the at least one tube. Guards can for instance be placed above the perforations in order to prevent material accumulating in the perforations. It is also possible to arrange the perforations mainly on the underside of the tube. This results in a low resistance during turning, prevents contamination and carries the air sufficiently deep into the layer. The aerator can for instance also consist of a number of tubes of different lengths in order to blow the air into the material at different longitudinal positions. Using tubes with decreasing diameters enables the tubes to be inserted into each other.

The aerator is preferably configured to blow air substantially downward into the material. The airflows can thus be distributed uniformly through the material. This prevents a channel or a passage from forming in the manure and supplied air from flowing through the material without much resistance, and thus contributing little to the drying of the manure.

The aerator is configured to supply air to material, and particularly to the manure, such that the manure is provided with sufficient oxygen, and to supply air to the manure such that the manure to be processed has a temperature of between 50 and 70 degrees Celsius so as to compost naturally. When there is sufficient oxygen, and at such a temperature, it is possible to process and dry the manure effectively. In order to control the oxygen and the temperature, an oxygen and/or temperature sensor and a control system are for instance provided for controlling the aerator on the basis of the measured values.

The aerator comprises for instance a fan disposed outside the drying drum for supplying outside air, preferably conditioned air such as animal accommodation air, to the organic material such as the animal manure. An advantage of supplying conditioned air is that it is generally relatively dry and can absorb and discharge heat and moisture of the manure to be processed. The rotational speed of the fan can preferably be controlled so that different quantities of air can be supplied to the drying drum using the same fan. Air from the animal accommodation in which the animals are kept is preferably supplied to the drying drum via the fan. Insulated conduits are for instance provided for this purpose between the animal accommodation and the fan.

The aerator can also be provided with a heating for heating the supplied air. The heat or energy for heating is preferably extracted from the processing process so that no additional energy is necessary. Supplying heated air enables the flow rate to be reduced while achieving the same drying.

The system is for instance also provided with a pressing device situated outside the drying drum for pressing processed material. Because the material is dried effectively in the drying drum according to the invention it is possible to press the material into pellets and/or granules after processing in the drum. The material is for this purpose supplied from the drying drum to the pressing device, which presses the material into these pellets and/or granules. The material can then be transported in simple manner.

The system is for instance provided close to the outfeed opening of the drying drum with a stationary drying unit for drying the material processed in the drying drum, wherein the drying unit is situated at least partially in the outfeed part of the drying drum. The material is already being dried during processing of the material in the processing part. The drying unit serves to further dry the processed material, which results in a drier material.

The drying unit comprises for instance a perforated plate. When the material from the processing part rests on the perforated plate, air can flow more easily through the processed material in order to further dry the material. It is however possible to drive air actively through the manure on the plate, wherein the air flows out through the perforations in the plate. The material is for instance scooped onto the perforated plate by the displacers or vanes in the outfeed part. The vanes in the outfeed part of the drying drum are thus preferably configured to place material to be dried onto the drying unit.

The perforated plate extends for instance in longitudinal direction of the drum at least partially at an angle relative to the horizontal. Material which has been scooped onto the plate can hereby run off the plate again under the influence of the force of gravity so as to create space for new material to be dried further. The angle also contributes to realizing a constant quantity of material on the plate. The angle preferably lies between 5 and 60 degrees, particularly between 10 and 40 degrees, more particularly between 20 and 30 degrees.

The perforated plate can also consist of several stages or steps, wherein each successive step is offset in height relative to a preceding step. The perforations can be situated on the upper side of the steps and/or in the upright parts of the steps. When the perforations are situated in the upright parts of the steps, the perforations are for instance guarded from the material and from the impurities present in the manure, such as grit, gravel and/or feathers, by the upper sides of the steps.

The system preferably comprises two aerators, a first aerator for aerating the material in the processing part of the drum and a second aerator for aerating the material in the outfeed part of the drum. This enables dry air to be supplied to both parts so as to extract as much moisture as possible from the material. It is moreover possible to adapt the air flow in both parts to their specific functions, for instance by blowing more air into the outfeed part than into the processing part. This is because the temperature of the material, such as for instance the manure, is important in the processing part for the composting of this material, whereas this temperature is less important in the outfeed part.

The outfeed part is for instance provided with an air discharge opening for discharging air supplied by the second aerator. This is particularly advantageous when the outfeed part is separated from the processing part by for instance a partition, wherein the air condition in the outfeed part is controllable by infeed and discharge of air, and the parts are separated from each other. The air in the processing part is relatively humid relative to the air in the outfeed part, while the air in the outfeed part is relatively dusty relative to the air in the processing part. The division ensures that the two air conditions remain separated from each other. The relatively dusty air in the outfeed part can for instance be dry filtered. This results in a relatively dry air which can for instance be supplied to the processing part again in order to extract moisture from the material to be processed.

The infeed part can also be provided with an extractor for extracting air from the drying drum. Relatively humid air is extracted, and an air flow from relatively dry air to relatively humid air is achieved, by placing the extractor in the infeed part of the drum. This prevents for instance drier manure from coming into contact with humid air and being able to absorb moisture again.

The drying unit comprises for instance at least two upright partitions for collecting composted material, such as the manure, between the partitions. The partitions are for instance positioned vertically on the drying unit and extend substantially in longitudinal direction of the drum. Manure can thus be collected between the partitions, and air can for instance be supplied via the perforated plate to the manure. The volume of material which can be dried per opening in the perforated plate can hereby be increased. The partitions prevent material on the plate from sliding freely off the plate and increase the residence time of the material on the plate.

The frame of the system is for instance provided with two upright stationary walls, one on each end surface of the drying drum, wherein the walls and the drying drum at least partially enclose a cylindrical space and are provided with an infeed and an outfeed opening. The advantage of stationary end surfaces is that the infeed and outfeed opening of the drum do not rotate, and that material can be supplied and discharged in simple manner. The stationary aerator of the system can also be mounted on these stationary walls.

A seal is for instance situated between the stationary walls and the rotatable drying drum in order to prevent material from flowing away between the drum and the walls. It is possible to give the seal a multiple form, wherein a first seal, for instance between the stationary infeed wall and the infeed part, partially seals the infeed part and allows passage of a small quantity of material. A second seal, which is for instance provided with flexible seals such as rubbers, is then situated between the first seal and the wall. Situated on the inner wall of the drying drum are for instance carriers which entrain the small quantity of manure which has been allowed to pass and release it again in the infeed part or on the material supply, for instance via a chamfered surface. This results in a small controlled leak of material at the first seal and a complete sealing at the second seal.

The system can also be provided with a conveyor for transporting material dried by the drum to the infeed opening. Dry manure can hereby for instance be guided through the drum a second time in order to achieve additional drying. It is however possible to supply the dried manure in combination with relatively wet manure. The combined supplied manure hereby has an average humidity, the average of the dried and new manure. This makes it possible to dry relatively humid manure in the drum in the second instance. The conveyor is for instance a conveyor belt.

The system comprises for instance an air discharge situated in the processing part and/or the infeed part for discharging air from the drying drum. The discharge is preferably situated close to the infeed opening of the drying drum.

The invention also relates to a method for processing, particularly sanitizing and drying, organic material such as animal manure, for instance by means of a system according to the present invention, comprising the steps of frequently supplying material to be processed, such as chicken manure or animal manure, to an infeed part of a drying drum; rotating the drum for transporting the material from the infeed part to an outfeed part of the drying drum; supplying air to the material such that the material is provided with sufficient oxygen to compost naturally, preferably at a flow rate subject to the quantity of material in the drying drum; allowing the material to compost in the drying drum and discharging the composted material from the outfeed part of the drying drum.

The air can for instance be supplied such that the material has a temperature of between 50 and 70 degrees Celsius so as to compost naturally.

The material can for instance be composted in the drying drum without heating the drying drum and/or adding external heat.

The method can also comprise the step of measuring the temperature in the drying drum, wherein rotating of the drum and/or supplying of air and/or supplying of the material to be processed is subject to the temperature in the drying drum.

The invention will now be elucidated with reference to the following figures, in which:
- figure 1 shows a schematic view of a system according to the present invention;
- figure 2 shows a detail view of the infeed part of figure 1;
- figure 3 shows a schematic view from the inside of the drying drum according to the present invention;
- figure 4 shows schematically a detail of a displacer of figure 3;
- figure 5 shows schematically the detail of figure 4 from a different perspective;
- figure 6 shows schematically a drying unit according to the invention;
- figure 7 shows schematically a front view of the outfeed part of the drying drum provided with a drying unit;
- figure 8 shows schematically an interior view of the drying unit in the drying drum;
- figure 9 shows schematically a partially cut-away view of a system according to the present invention;
- figure 10 shows schematically a detail of the drying unit of figure 9; and
- figure 11 shows schematically an interior view of a system according to the present invention.

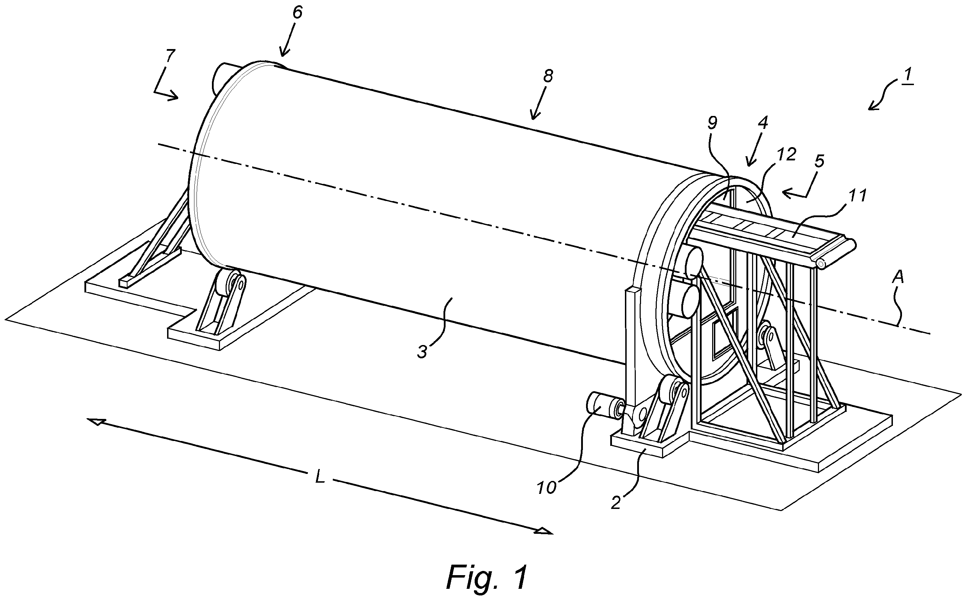

Figure 1 shows schematically a system (1) according to the present invention for processing, particularly sanitizing and drying, animal manure, comprising: a stationary frame (2) and, held by the frame (2), a drying drum (3) which extends substantially horizontally and is elongate. The drying drum (3) is divided in longitudinal direction (L) into an infeed part (4) on a first end surface (5) of the drum (3), an outfeed part (6) on a second, opposite end surface (7) of the drum (3) and a processing part (8) situated between the infeed (4) and outfeed part (6) for processing supplied manure.

The infeed part (4) is provided with an infeed opening (9) for receiving manure in the drum (3). Figure 1 also shows a drive (10) connected to the frame (2) for rotating the drying drum (3) around the longitudinal axis (A) of the drying drum (3), and a conveyor belt (11) for supplying manure to the infeed opening (9).

The drying drum (3) is provided on both end surfaces with a stationary wall (12) which is provided with the infeed opening (9).

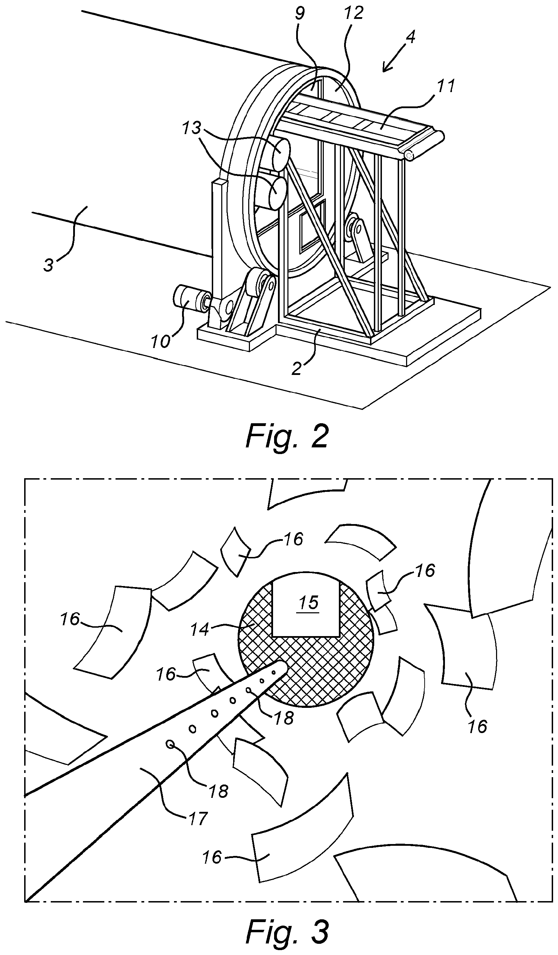

Figure 2 shows schematically a detail of the infeed part (4) of figure 1, and shows the frame (2), the drying drum (3), the infeed opening (9) in the wall (12), the drive (10) and the conveyor belt (11). Two aerating tubes (13) are also provided in the stationary wall (12).

Figure 3 shows schematically a view from inside the drying drum, from the infeed part to the outfeed part. An outfeed opening (15) for discharging manure is provided in a stationary rear wall (14). Figure 3 also shows that the inner side of the drying drum (3) is provided with displacers (16), formed by vanes (16), and with a tube (17) with perforations (18). The tube (17) extends in longitudinal direction of the drying drum.

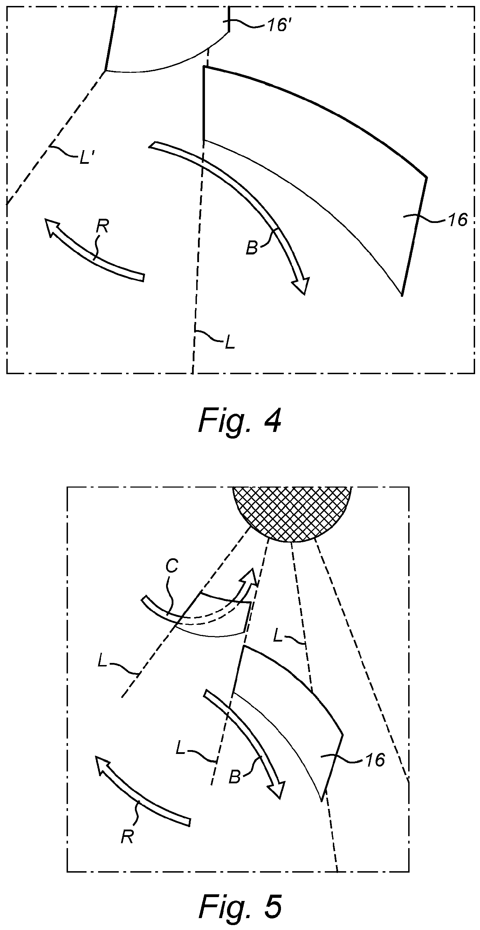

Figure 4 shows schematically a detail of a displacer (16) of figure 3. The displacer (16) consists of a vane (16) which takes a curved form relative to the longitudinal direction (L) of the drying drum. The shown vane (16) is situated in the processing part of the drying drum. When the drum rotates in rotation direction (R), manure in the drum is moved partially in the indicated direction (B) of the arrow, so in this case backward, due to the curved form of the vane (16). The subsequent vane (16') is also shown curved, but ensures conversely that when the drum rotates in rotation direction (R) the manure in the drum is moved partially forward as according to arrow (C) in the direction of the outfeed part due to the curved form of the vane (16'). If the rotation direction (R) were the other way round, the other arrows would also change direction. The main function of the vanes (16, 16') is to entrain manure in the drum in rotation direction (R) during rotation.

Figure 5 shows the arrangement of figure 4 from a different perspective.

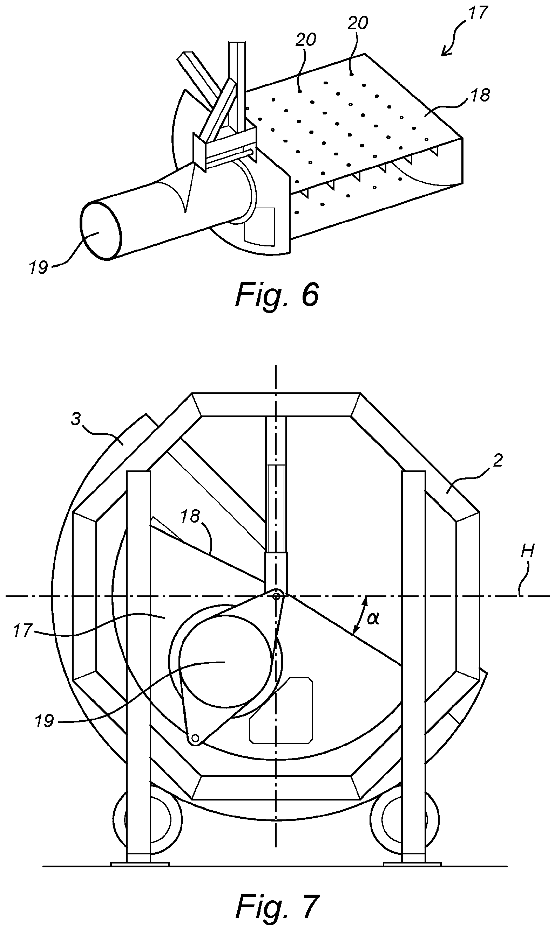

Figure 6 shows schematically a stationary drying unit (17) according to the present invention for drying processed manure in the drying drum. Stationary is understood to mean that the drying unit does not rotate, this in contrast to the drying drum. The drying unit (17) comprises a perforated plate (18) and an air supply (19) for supplying air to the drying unit (17) and bringing this air into contact with manure on the plate (18) via perforations (20). The air supply (19) is for instance connected to a separate supply.

Figure 7 shows schematically a front view of the outfeed part of the drying drum, wherein a part of the drying drum (3) and a part of the frame (2) are shown. The drying unit (17) extends to a position in the outfeed part of the drum (3), wherein the stationary rear wall (not shown) is situated between the outer end of the gas supply (19) and the perforated plate (18). Figure 7 also shows schematically that the plate (18) extends at an angle (α) relative to the horizontal (H), this angle being about 30 degrees in the shown figure.

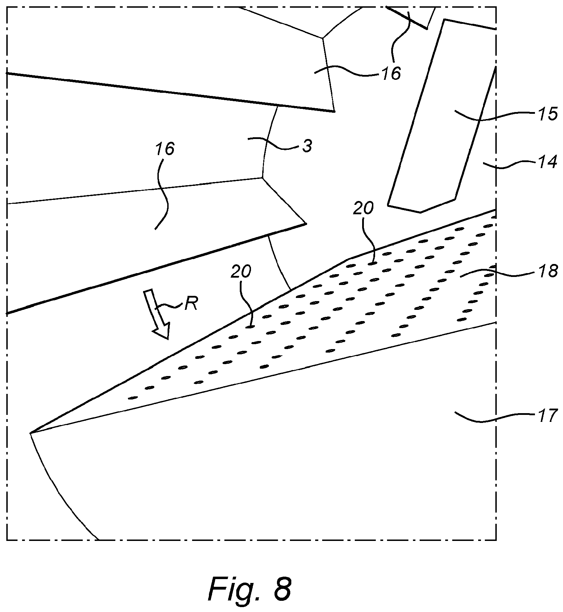

Figure 8 shows schematically an interior view of the drying unit (17) in the drying drum (3) and also shows the rear wall (14) provided with outfeed opening (15), as well as vanes (16). The vanes (16) are configured to entrain manure when the drying drum (3) rotates in rotation direction (R) and to place it on the highest part of the plate (18), on the right in the figure.

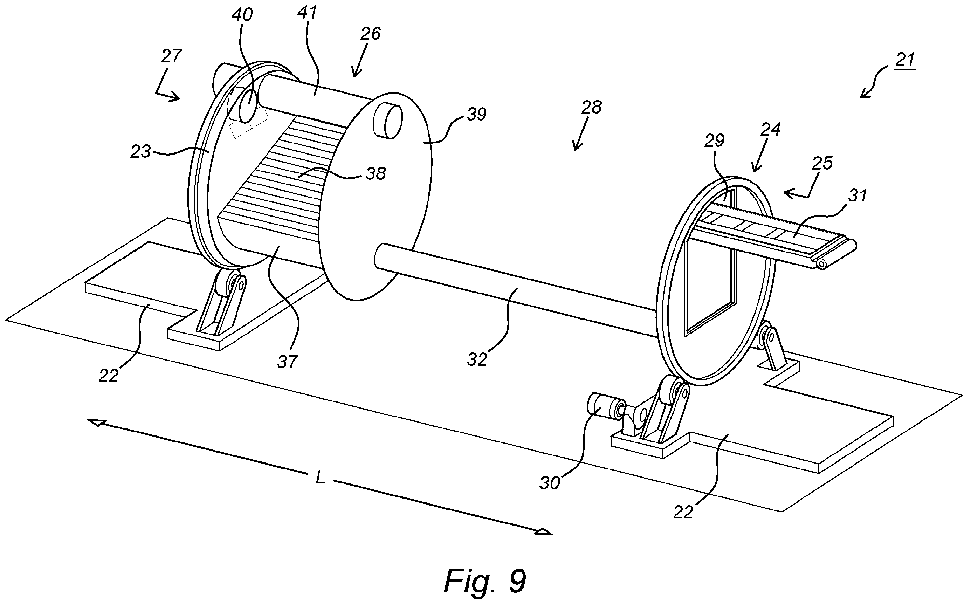

Figure 9 shows a partially cut-away view of a system (21) according to the present invention, comprising a stationary frame (22) and, held by the frame (22), a drying drum (23) which extends substantially horizontally and is elongate. The drying drum (23) has been almost completely omitted in figure 9, but is divided in longitudinal direction (L) into an infeed part (24) on a first end surface (25) of the drum (23), an outfeed part (26) on a second, opposite end surface (27) of the drum (23) and a processing part (28) situated between the infeed (24) and outfeed part (26) for processing supplied manure.

The infeed part (24) is provided with an infeed opening (29) for receiving manure in the drum (23). Figure 9 also shows a drive (30) connected to the frame (22) for rotating the drying drum (23) around the longitudinal axis of the drying drum (23), and a conveyor belt (31) for supplying manure to the infeed opening (29).

An aerator (32) for supplying air to the manure is provided in the drying drum (23). The outfeed part (26) of the drying drum (23) is provided with a drying unit (37) according to the present invention for drying processed manure in the drying drum. Stationary is understood to mean that the drying unit does not rotate, this in contrast to the drying drum. The drying unit (37) comprises a perforated plate (38) and an air supply (not shown) for supplying air to the drying unit (37) and bringing this air into contact with manure on the plate (38) via perforations. The plate (38) of the drying unit (37) is shown in stepped manner, wherein the perforations are situated in the upright parts of the step.

The outfeed part (26) and the processing part (28) are separated from each other by a partition (39). The two parts have their own air discharge, a first (40) for the outfeed part and a second (41) for the processing part.

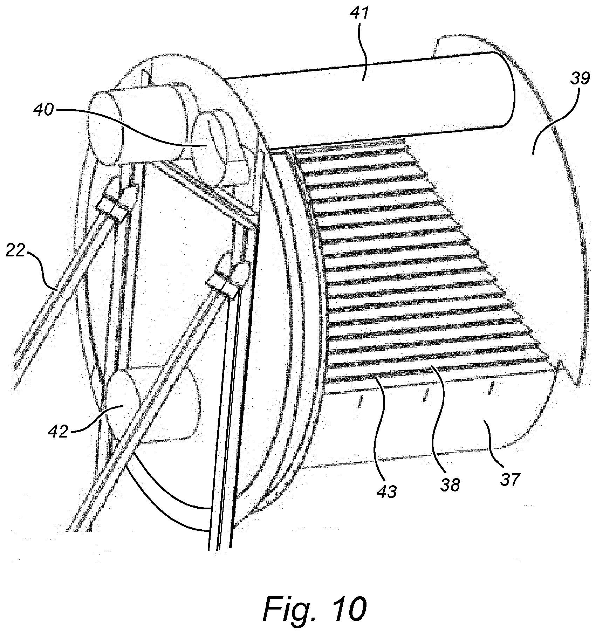

Figure 10 shows schematically a detail of the drying unit (37) of figure 9. The drying unit (37) comprises a perforated plate (38) and an air supply (42) for supplying air to the drying unit (37) and bringing this air into contact with manure on the plate (38) via perforations (43). The plate (38) of the drying unit (37) is shown in stepped manner, wherein the perforations (43) are situated in the upright parts of the step.

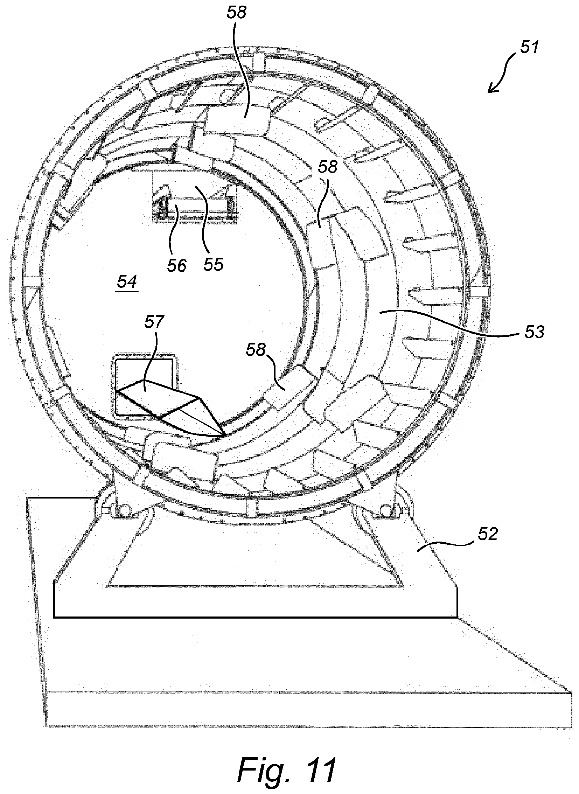

Figure 11 shows schematically a view of the inner side of a system (51) according to the present invention, comprising a stationary frame (52) and a drying drum (53) held by the frame (52). A stationary front wall (54) is provided with an infeed opening (55) through which a conveyor belt (56) can supply manure to the drum (53). The front wall (54) is also provided with an aerating tube (57) for supplying air to the manure. The tube (57) extends to a position in the drying drum (53). The inner wall of the drying drum (53) is provided with displacers (58). In the part of the drying drum (53) close to the infeed opening (55) the displacers (58) are configured to turn over the manure. In the central part of the drying drum (53) the displacers (58) are configured to mix the manure. In the part of the drying drum close to the outfeed opening (not shown) the displacers (58) are configured to entrain the manure in rotation direction and then drop this manure again at a higher level.

Described in the figures is the processing of manure, but the system from the figure description can nevertheless be used to process other material, such as organic material.

## Claims

1. System (1, 21, 51) for processing, particularly sanitizing and drying, organic material such as animal manure, comprising:
a. a stationary frame (2, 22, 52);
b. an elongate drying drum (3, 23, 53) which is held by the frame (2, 22, 52) and extends in horizontal direction (L), and is divided in longitudinal direction into
i. an infeed part (4, 24) on a first end surface (5, 25) of the drum (3, 23), provided with an infeed opening (9, 29, 55) for receiving material in the drum (3, 23, 53);
ii. an outfeed part (6, 26) on a second, opposite end surface (7, 27) of the drum (3, 23, 53), provided with an outfeed opening (15) for discharging material from the drum; and
iii. a processing part (8, 28) situated between the infeed (4, 24) and outfeed (6, 26) part for processing supplied material
c. a drive (10, 30) connectable to the frame (2, 22) for rotating the drying drum (3, 23) around the longitudinal axis (L) of the drying drum (3, 23);
d. wherein the infeed part (4, 24), the outfeed part (6, 26) and the processing part (8, 28) are each provided with displacers (16, 58) for displacing the material at least in rotation direction of the drum (3, 23, 53); and
e. **characterized by** a stationary aerator (32, 57), extending from the outer side of the drum (3, 23, 53) to at least a position in the processing part (8, 28) of the drying drum (3, 23, 53), for aerating the material in the drying drum (3, 23, 53).

2. System (1, 21, 51) as claimed in claim 1, wherein the processing part (8, 28) and the outfeed part(6, 26) are separated from each other by means of a division, such as a partition, wherein the division is provided with a passage opening for passage of material such as manure.

3. System (1, 21, 51) as claimed in any of the foregoing claims, wherein at the outfeed part (6, 26), the system (1, 21, 51) is provided with a stationary drying unit (17, 37) for drying material processed in the drying drum (3, 23, 53).

4. System (1, 21, 51) as claimed in claim 3, wherein the drying unit (17, 37) comprises a perforated plate (18, 38), wherein the perforated plate extends for instance in longitudinal direction (L) of the drum (3, 23, 53) at least partially at an angle relative to the horizontal.

5. System (1, 21, 51) as claimed in claim 3 or 4, comprising two aerators (32), a first aerator (32) for aerating the material in the processing part (8, 28) of the drum (3, 23, 53) and a second aerator (42) for aerating the material in the outfeed part (6, 26) of the drum (3, 23, 53), wherein the second aerator (42) is for instance configured to supply air through the perforated plate (18, 38) to the material to be dried in the outfeed part (6, 26) of the drying drum (3, 23, 53).

6. System (1, 21, 51) as claimed in any of claims 4-5, wherein the perforated plate (18, 38) extends in longitudinal direction (L) of the drum (3, 23, 53) at least partially at an angle relative to the horizontal.

7. System (1, 21, 51) as claimed in any of claims 4-6, wherein the perforated plate (18, 38) comprises several stages or steps, wherein each successive step is offset in height relative to a preceding step, and wherein the perforations (20, 43) are situated on the upper side of the steps and/or in the upright parts of the steps.

8. System (1, 21, 51) as claimed in any of claims 3-7, wherein the drying unit (17, 37) comprises at least two upright partitions for collecting composted material, such as the manure, between the partitions, wherein the partitions are preferably positioned vertically on the drying unit (17, 37) and extend in longitudinal direction (L) of the drum (3, 23, 53).

9. Method for processing, particularly sanitizing and drying, organic material such as animal manure, for instance by means of a system (1, 21, 51) as claimed in any of the foregoing claims 1-8, comprising the steps of:
a) frequently supplying material to be processed, such as chicken manure, to an infeed part (4, 24) of a drying drum (3, 23, 53);
b) rotating the drum (3, 23, 53) for transporting the material from the infeed part to an outfeed part (6, 26) of the drying drum (3, 23, 53);
c) supplying air to the material such that the material is provided with sufficient oxygen to compost naturally, preferably at a flow rate subject to the quantity of material in the drying drum (3, 23, 53);
d) allowing the material to compost in the drying drum (3, 23, 53);
e) drying the composted material with a drying unit (17, 37); and
f) discharging the composted material from the outfeed part (6, 26) of the drying drum (3, 23, 53).

10. Method as claimed in claim 9, wherein air is supplied such that the material has a temperature of between 50 and 70 degrees Celsius so as to compost naturally.

11. Method as claimed in any of the claims 9-10, comprising the step of measuring the temperature in the drying drum (3, 23, 53), wherein rotating of the drum (3, 23, 53) and/or supplying of air and/or supplying of the material to be processed is subject to the temperature in the drying drum (3, 23, 53).

## Patentansprüche

1. System (1, 21, 51) zur Verarbeitung, insbesondere zur Hygienisierung und Trocknung, von organischem Material, wie etwa Tierdung, das Folgendes umfasst:
a. einen stationären Rahmen (2, 22, 52);
b. eine längliche Trocknungstrommel (3, 23, 53), die durch den Rahmen (2, 22, 52) gehalten wird und sich in horizontaler Richtung (L) erstreckt und in länglicher Richtung geteilt ist in
i. einen Zuführungsteil (4, 24) an einer ersten Endoberfläche (5, 25) der Trommel (3, 23), bereitgestellt mit einer Zuführungsöffnung (9, 29, 55) zum Aufnehmen von Material in der Trommel (3, 23, 53);
ii. einen Abführungsteil (6, 26) an einer zweiten, gegenüberliegenden Endoberfläche (7, 27) der Trommel (3, 23, 53), bereitgestellt mit einer Abführungsöffnung (15) zum Auslassen von Material aus der Trommel; und
iii. einen Verarbeitungsteil (8, 28), befindlich zwischen dem Zuführungs- (4, 24) und dem Abführungsteil (6, 26) zum Verarbeiten von zugeführtem Material
c. einen Antrieb (10, 30), verbindbar mit dem Rahmen (2, 22) zum Drehen der Trocknungstrommel (3, 23) rund um die Längsachse (L) der Trocknungstrommel (3, 23);
d. wobei der Zuführungsteil (4, 24), der Abführungsteil (6, 26) und der Verarbeitungsteil (8, 28) jeweils mit Verdrängern (16, 58) zum Verdrängen des Materials zumindest in der Drehrichtung der Trommel (3, 23, 53) versehen sind; und
e. **gekennzeichnet durch** einen stationären Belüfter (32, 57), der sich von der Außenseite der Trommel (3, 23, 53) zu zumindest einer Position im Verarbeitungsteil (8, 28) der Trocknungstrommel (3, 23, 53) erstreckt, zum Belüften des Materials in der Trocknungstrommel (3, 23, 53).

2. System (1, 21, 51) nach Anspruch 1, wobei der Verarbeitungsteil (8, 28) und der Abführungsteil (6, 26) durch ein Teilungsmittel, wie etwa einen Teiler, voneinander getrennt sind, wobei die Teilung mit einer Durchgangsöffnung für den Durchgang von Material, wie etwa Dung, versehen ist.

3. System (1, 21, 51) nach einem der vorhergehenden Ansprüche, wobei das System (1, 21, 51) am Abführungsteil (6, 26) mit einer stationären Trocknungseinheit (17, 37) zum Trocknen von in der Trocknungstrommel (3, 23, 53) verarbeitetem Material versehen ist.

4. System (1, 21, 51) nach Anspruch 3, wobei die Trocknungseinheit (17, 37) eine perforierte Platte (18, 38) umfasst, wobei sich die perforierte Platte beispielsweise in Längsrichtung (L) der Trommel (3, 23, 53) zumindest teilweise in einem Winkel relativ zur Horizontalen erstreckt.

5. System (1, 21, 51) nach Anspruch 3 oder 4, umfassend zwei Belüfter (32), einen ersten Belüfter (32) zum Belüften des Materials im Verarbeitungsteil (8, 28) der Trommel (3, 23, 53) und einen zweiten Belüfter (42) zum Belüften des Materials im Abführungsteil (6, 26) der Trommel (3, 23, 53), wobei der zweite Belüfter (42) beispielsweise dazu ausgelegt ist, Luft durch die perforierte Platte (18, 38) zu dem zu trocknenden Material in dem Abführungsteil (6, 26) der Trocknungstrommel (3, 23, 53) zuzuführen.

6. System (1, 21, 51) nach einem der Ansprüche 4-5, wobei sich die perforierte Platte (18, 38) in Längsrichtung (L) der Trommel (3, 23, 53) zumindest teilweise in einem Winkel relativ zur Horizontalen erstreckt.

7. System (1, 21, 51) nach einem der Ansprüche 4-6, wobei die perforierte Platte (18, 38) mehrere Absätze oder Stufen umfasst, wobei jede nachfolgende Stufe in der Höhe relativ zu einer vorangehenden Stufe versetzt ist, und wobei die Perforationen (20, 43) an der Oberseite der Stufen und/oder in den aufrechten Teilen der Stufen befindlich sind.

8. System (1, 21, 51) nach einem der Ansprüche 3-7, wobei die Trocknungseinheit (17, 37) mindestens zwei aufrechte Teilungen zum Sammeln von kompostiertem Material, wie etwa des Dungs, zwischen den Teilungen umfasst, wobei die Teilungen vorzugsweise vertikal an der Trocknungseinheit (17, 37) positioniert sind und sich in Längsrichtung (L) der Trommel (3, 23, 53) erstrecken.

9. Verfahren zur Verarbeitung, insbesondere zur Hygienisierung und Trocknung, von organischem Material, wie etwa Tierdung, beispielsweise mittels eines Systems (1, 21, 51) nach einem der vorhergehenden Ansprüche 1-8, das die folgenden Schritte umfasst:
a) häufiges Zuführen von zu verarbeitendem Material, wie etwa Hühnerdung, zu einem Zuführungsteil (4, 24) einer Trocknungstrommel (3, 23, 53);
b) Drehen der Trommel (3, 23, 53) zum Transportieren des Materials vom Zuführungsteil zu einem Abführungsteil (6, 26) der Trocknungstrommel (3, 23, 53);
c) Zuführen von Luft zum Material, sodass das Material mit ausreichend Sauerstoff versorgt wird, um natürlich zu kompostieren, vorzugsweise bei einer Durchflussrate, die von der Quantität von Material in der Trocknungstrommel (3, 23, 53) abhängt;
d) Ermöglichen, dass das Material in der Trocknungstrommel (3, 23, 53) kompostiert;
e) Trocknen des kompostierten Materials mit einer Trocknungseinheit (17, 37); und
f) Auslassen des kompostierten Materials aus dem Abführungsteil (6, 26) der Trocknungstrommel (3, 23, 53).

10. Verfahren nach Anspruch 9, wobei Luft zugeführt wird, sodass das Material eine Temperatur von zwischen 50 und 70 Grad Celsius aufweist, um natürlich zu kompostieren.

11. Verfahren nach einem der Ansprüche 9-10, umfassend den Schritt des Messens der Temperatur in der Trocknungstrommel (3, 23, 53), wobei Drehen der Trommel (3, 23, 53) und/oder Zuführen von Luft und/oder Zuführen des zu verarbeitenden Materials von der Temperatur in der Trocknungstrommel (3, 23, 53) abhängig ist.

## Revendications

1. Système (1, 21, 51) pour le traitement, en particulier l'aseptisation et le séchage, de matière organique telle que du fumier animal, comprenant :
a. un cadre fixe (2, 22, 52) ;
b. un tambour de séchage allongé (3, 23, 53) qui est maintenu par le cadre (2, 22, 52) et s'étend dans la direction horizontale (L), et est divisé dans la direction longitudinale en
i. une partie d'alimentation (4, 24) sur une première surface d'extrémité (5, 25) du tambour (3, 23), pourvue d'une ouverture d'alimentation (9, 29, 55) pour recevoir de la matière dans le tambour (3, 23, 53) ;
ii. une partie d'évacuation (6, 26) sur une seconde surface d'extrémité (7, 27) opposée du tambour (3, 23, 53), pourvue d'une ouverture d'évacuation (15) pour évacuer de la matière du tambour ; et
iii. une partie de traitement (8, 28) située entre les parties d'alimentation (4, 24) et d'évacuation (6, 26) pour traiter de la matière fournie ;
c. un dispositif d'entraînement (10, 30) pouvant être relié au cadre (2, 22) pour faire tourner le tambour de séchage (3, 23) autour de l'axe longitudinal (L) du tambour de séchage (3, 23) ;
d. dans lequel la partie d'alimentation (4, 24), la partie d'évacuation (6, 26) et la partie de traitement (8, 28) sont chacune pourvues de dispositifs de déplacement (16, 58) pour déplacer la matière au moins dans le sens de rotation du tambour (3, 23, 53) ; et
e. **caractérisé par** un aérateur fixe (32, 57), s'étendant depuis le côté externe du tambour (3, 23, 53) jusqu'à au moins une position dans la partie de traitement (8, 28) du tambour de séchage (3, 23, 53), pour aérer la matière dans le tambour de séchage (3, 23, 53).

2. Système (1, 21, 51) selon la revendication 1, dans lequel la partie de traitement (8, 28) et la partie d'évacuation (6, 26) sont séparées l'une de l'autre au moyen d'une division, telle qu'une partition, dans lequel la division est pourvue d'une ouverture de passage pour le passage de matière telle que du fumier.

3. Système (1, 21, 51) selon l'une quelconque des revendications précédentes, dans lequel au niveau de la partie d'évacuation (6, 26), le système (1, 21, 51) est pourvu d'une unité de séchage fixe (17, 37) pour sécher de la matière traitée dans le tambour de séchage (3, 23, 53).

4. Système (1, 21, 51) selon la revendication 3, dans lequel l'unité de séchage (17, 37) comprend une plaque perforée (18, 38), dans lequel la plaque perforée s'étend par exemple dans la direction longitudinale (L) du tambour (3, 23, 53) au moins partiellement selon un angle relatif à l'horizontale.

5. Système (1, 21, 51) selon la revendication 3 ou 4, comprenant deux aérateurs (32), un premier aérateur (32) pour aérer la matière dans la partie de traitement (8 ,28) du tambour (3, 23, 53) et un second aérateur (42) pour aérer la matière dans la partie d'évacuation (6, 26) du tambour (3, 23, 53), dans lequel le second aérateur (42) est par exemple configuré pour fournir de l'air à travers la plaque perforée (18, 38) à la matière destinée à être séchée dans la partie d'évacuation (6, 26) du tambour de séchage (3, 23, 53).

6. Système (1, 21, 51) selon l'une quelconque des revendications 4 à 5, dans lequel la plaque perforée (18, 38) s'étend dans la direction longitudinale (L) du tambour (3, 23, 53) au moins partiellement selon un angle relatif à l'horizontale.

7. Système (1, 21, 51) selon l'une quelconque des revendications 4 à 6, dans lequel la plaque perforée (18, 38) comprend plusieurs niveaux ou marches, dans lequel chaque marche successive est décalée en hauteur par rapport à une marche précédente, et dans lequel les perforations (20, 43) sont situées sur le côté supérieur des marches et/ou dans les parties verticales des marches.

8. Système (1, 21, 51) selon l'une quelconque des revendications 3 à 7, dans lequel l'unité de séchage (17, 37) comprend au moins deux partitions verticales pour collecter de la matière compostée, telle que du fumier, entre les partitions, dans lequel les partitions sont de préférence positionnées verticalement sur l'unité de séchage (17, 37) et s'étendent dans la direction longitudinale (L) du tambour (3, 23, 53).

9. Procédé pour le traitement, en particulier l'aseptisation et le séchage, de matière organique telle que du fumier animal, par exemple au moyen d'un système (1, 21, 51) selon l'une quelconque des revendications précédentes 1 à 8, comprenant les étapes consistant à :
a) fournir fréquemment de la matière destinée à être traitée, telle que du fumier de poule, à une partie d'alimentation (4, 24) d'un tambour de séchage (3, 23, 53) ;
b) faire tourner le tambour (3, 23, 53) pour transporter la matière de la partie d'alimentation vers une partie d'évacuation (6, 26) du tambour de séchage (3, 23, 53) ;
c) fournir de l'air à la matière de telle sorte que la matière est pourvue de suffisamment d'oxygène pour se composter naturellement, de préférence à un débit soumis à la quantité de matière dans le tambour de séchage (3, 23, 53) ;
d) permettre à la matière de se composter dans le tambour de séchage (3, 23,53) ;
e) faire sécher la matière compostée avec une unité de séchage (17, 37) ; et
f) évacuer la matière compostée de la partie d'évacuation (6, 26) du tambour de séchage (3, 23, 53).

10. Procédé selon la revendication 9, dans lequel l'air est fourni de telle sorte que la matière a une température comprise entre 50 et 70 degrés Celsius de manière à se composter naturellement.

11. Procédé selon l'une quelconque des revendications 9 à 10, comprenant l'étape consistant à mesurer la température dans le tambour de séchage (3, 23, 53), dans lequel la rotation du tambour (3, 23, 53) et/ou la fourniture d'air et/ou la fourniture de la matière destinée à être traitée est soumise à la température dans le tambour de séchage (3, 23, 53).
